# EUROPÄISCHE PATENTSCHRIFT

(11) **EP 3 443 603 B1**
(45) Veröffentlichungstag und Bekanntmachung des Hinweises auf die Patenterteilung: **18.03.2020**
(21) Anmeldenummer: 17716922.4
(22) Anmeldetag: 12.04.2017
(51) Int. Cl.: H01M 2/02, H01M 2/12

(54) **DRUCKENTLASTUNGSVORRICHTUNG FÜR EIN BATTERIEGEHÄUSE, BATTERIEGEHÄUSE MIT DER DRUCKENTLASTUNGSVORRICHTUNG, BATTERIE SOWIE VERFAHREN ZUR DRUCKENTLASTUNG EINER BATTERIE**
PRESSURE RELIEF DEVICE FOR A BATTERY HOUSING, BATTERY HOUSING WITH THE PRESSURE RELIEF DEVICE, BATTERY, AND PROCESS FOR PRESSURE RELIEF OF A BATTERY
DISPOSITIF DE DÉTENTE DE PRESSION POUR UN BOITIER DE BATTERIE, BOITIER DE BATTERIE AVEC DISPOSITIF DE DÉTENTE DE PRESSION, BATTERIE, ET PROCEDE DE DÉTENTE DE PRESSION D'UNE BATTERIE

(30) Priorität: 16.04.2016 DE 102016004648
(43) Veröffentlichungstag der Anmeldung: 20.02.2019
(73) Patentinhaber: Hugo Benzing GmbH & Co. KG, 70825 Korntal-Münchingen (DE)
(72) Erfinder: ASENSIO-GLINSEK, Klavdija, 70191 Stuttgart (DE); KROGGEL, Jan, 73730 Esslingen (DE); SELING, Barbara, 73265 Dettingen/Teck (DE); WEIDMANN, Stephan, 70182 Stuttgart (DE)
(74) Vertreter: Fleck, Hermann-Josef
(86) Internationale Anmeldenummer: PCT/EP2017/058879
(87) Internationale Veröffentlichungsnummer: WO 2017/178564

(56) Entgegenhaltungen:
- CN-U- 203 081 514
- DE-A1-102014 017 232
- US-A1- 2013 192 688

## Beschreibung

Die Erfindung betrifft eine Druckentlastungsvorrichtung für ein Batteriegehäuse, ein Batteriegehäuse mit der Druckentlastungsvorrichtung, eine Batterie mit dem Batteriegehäuse und ein Verfahren zur Druckentlastung einer Batterie.

Bei (auch) elektrisch antreibbaren Fahrzeugen (bspw. reinen Elektrofahrzeugen, Plug-In-Hybrid-Fahrzeugen, seriellen Hybridfahrzeugen) kommen derzeit zur Versorgung des elektrischen Antriebsmotors oder der elektrischen Antriebsmotoren überwiegend wiederaufladbare Batterien auf Lithium-Ionen-Basis zum Einsatz. Derartige Batterien enthalten eine Mehrzahl wiederaufladbarer Batteriezellen, die wiederum wenigstens zwei Elektroden, d.h. eine Anode und eine Kathode aufweisen, die durch einen elektrolytgetränkten Separator elektrisch gegeneinander isoliert sind.

Üblicherweise werden mehrere Batteriezellen zu einem Batteriemodul zusammengefasst und mehrere Batteriemodule zusammen mit weiteren elektrischen Komponenten in einem Batteriegehäuse mit festen, vergleichsweise steifen Wandungen angeordnet.

Wäre ein derartiges Batteriegehäuse hermetisch gegen die Umwelt verschlossen, würde sich etwa bei Höhenfahrten ein Druckunterschied zwischen der Luft im Batterieinnenraum und der Umgebungsluft ausbilden. In ähnlicher Weise könnten Druckunterschiede zwischen dem Gas im Batterieinnenraum und der Umgebungsluft bei Temperaturen auftreten, die größer oder kleiner sind als die Temperatur, die beim Verschließen eines derartigen Batteriegehäuses gegeben war. Ohne einen Ausgleich dieser Druckunterschiede bestünde die Gefahr, dass sich das Batteriegehäuse auswölben oder zusammenziehen könnte.

Vor diesem Hintergrund ist es bekannt, in der Wandung des Batteriegehäuses eine Druckausgleichsvorrichtung vorzusehen, durch die im normalen Betrieb der Batterie der Luftdruck zwischen dem Batterieinnenraum und der Umgebung ausgeglichen werden kann.

Da ein Eindringen von Wasser in das Innere des Batteriegehäuses verhindert werden muss, weist die Druckausgleichsvorrichtung in aller Regel eine Druckausgleichs-Membran mit Mikroporen auf, etwa eine PTFE-Membran, durch die Luft strömen kann, durch die Wassertropfen aufgrund der Oberflächenspannung aber erst bei einer Wassersäule von 2 m oder mehr hindurchdringen können. Bei den gebräuchlichen Größen der Druckausgleichs-Membran beträgt der Luftaustausch durch die Poren der Druckausgleichs-Membran etwa 1000 cm³/min bei einer Druckdifferenz von 10 mbar.

Unter anderem bei Überladung oder einem Kurzschluss kann es zur schlagartigen Freisetzung der in einer Batterie-Einzelzelle enthaltenen Energie mit der Folge von starker Wärmeentwicklung kommen. Bei Überschreitung einer bestimmten Temperatur setzt eine exotherme Reaktion der Zellchemie ein (u. a. in Verbindung mit Freisetzung von Sauerstoff aus den in der Zellchemie enthaltenen Metalloxiden), die zur massiven Überhitzung und zu Ausgasungen bzw. verdampfenden Materialien führen kann. Auch besteht die Möglichkeit, dass sich die verdampfenden Materialien entzünden. Diese Vorgänge werden als "thermisches Durchgehen" oder "thermal runaway" bezeichnet.

Bei einem thermischen Durchgehen einer Lithium-Ionen-Batteriezelle entstehen je nach Ladezustand der Batteriezelle Gasmengen von bis zu 400 L innerhalb von 0,3 bis 3 sec, bei einer Gastemperatur von bis zu 800 °C. Da Batteriegehäuse in der Regel nur für einen maximalen Innen-Überdruck von 0,5 bar ausgelegt sind, und dieser Innen-Überdruck bei einem thermischen Durchgehen von bereits einer Batteriezelle überschritten wird, würde ein hermetisch abgeschlossenes Batteriegehäuse bei einem solchen Ereignis explosionsartig platzen.

Aus Sicherheitsgründen ist es aber erforderlich, dass auch bei einem thermischen Durchgehen einer Batteriezelle oder einer Batterie keine Schadgase in den Fahrgastraum dringen können. Idealerweise sollte das Batteriegehäuse daher auch bei einem thermischen Durchgehen einer Batteriezelle oder einer Batterie möglichst intakt bleiben und eine kontrollierte Ableitung der entstehenden Gasmenge nach Außen erfolgen.

Die oben erwähnte Druckausgleichs-Membran ermöglicht keinen ausreichend großen Gasstrom, vielmehr würde sich die Druckausgleichs-Membran aufgrund der in dem Batteriegehäuse entstehenden Gasmenge ohne weitere Maßnahmen lediglich nach außen wölben und erst bei ca. 3 bar aufplatzen, also erst oberhalb des Überdrucks von etwa 0,5 Bar, bei dem das Batteriegehäuse bereits zerstört wird.

Zur Überwindung dieses Nachteils wurde vorgeschlagen, zum einen die Öffnung, über die sich die Druckausgleichs-Membran erstreckt so groß auszulegen, dass der Druck bei einer kontrollierten Druckentlastung durch diese Öffnung hindurch bei geöffneter Druckausgleichs-Membran nicht über 0,5 bar steigen kann und weiter ein rechtzeitiges und kontrolliertes Öffnen der Druckausgleichs-Membran vorzusehen.

Eine hierzu aus dem Stand der Technik bekannte Lösung sieht vor, einen Dorn derart an der Außenseite der Öffnung anzuordnen, dass die sich bei einem Überdruck im Inneren des Batteriegehäuses nach außen wölbende Druckausgleichs-Membran gegen den Dorn gedrückt und durchstochen wird. Im Idealfall platzt hierdurch die Druckausgleichs-Membran (die aufgrund dieses Vorgangs oftmals auch "Berst-Membran" genannt wird) vollständig auf, und die den Überdruck im Batteriegehäuse verursachenden Gase können entweichen. Häufig wird die Membran jedoch nur angestochen, ohne dabei zu platzen. Der Überdruck in der Batterie wird dann unkontrolliert durch Aufplatzen des Batteriegehäuses abgebaut.

Ein sicheres Platzen einer Berst-Membran kann durch die in der DE 10 2014 017 232 A1 vorgeschlagenen Lösung erreicht werden. Gemäß dieser Offenlegungsschrift wird eine Batteriegehäuseanordnung für ein Kraftfahrzeug mit einem Batteriegehäuse zur Aufnahme einer Mehrzahl von Batteriezellen, einer Druckausgleichsvorrichtung mit einem Trennelement (etwa einer Membran) zwischen einem Innenbereich innerhalb des Batteriegehäuses und einem Außenbereich außerhalb des Batteriegehäuses, sowie einem Halteelement für das Trennelement zur mechanischen Befestigung des Trennelements an dem Batteriegehäuse vorgeschlagen. Vor dem Trennelement ist auf der den Innenbereich zugewandten Seite des Trennelements ein plattenförmiges Element parallel zu dem Trennelement angeordnet, wobei das plattenförmige Element über einen plastisch oder elastisch verformbaren Steg mit dem Halteelement mechanisch gekoppelt ist. Das plattenförmige Element kippt bei einem ausreichend großen Staudruck um eine durch den Steg gegebene Achse und bildet dabei an dem Trennelement entlang einer Kante des plattenförmigen Elements, welche in die Oberfläche des Trennelements eingedrungen ist, einen Riss zur Ableitung des Überdrucks.

Es ist Aufgabe der vorliegenden Erfindung diesen vorbekannten Stand der Technik in neuartiger und erfinderischer Weise weiterzubilden.

Diese Aufgabe wird gelöst durch die Druckentlastungsvorrichtung gemäß Anspruch 1, das Batteriegehäuse gemäß Anspruch 5, die Batterie gemäß Anspruch 8 und das Verfahren zur Druckentlastung einer Batterie gemäß Anspruch 9. Vorteilhafte Weiterbildungen und Ausgestaltungen der Druckentlastungsvorrichtung und des Batteriegehäuses sind Gegenstand der Unteransprüche.

Erfindungsgemäß wird eine Druckentlastungsvorrichtung für ein Batteriegehäuse vorgeschlagen, welche dazu ausgelegt ist, eine aufgrund eines thermischen Durchgehens von wenigstens einer Batteriezelle entstehende Druckdifferenz zwischen einem Innendruck des Batteriegehäuses und einem Umgebungsdruck des Batteriegehäuses auszugleichen, wobei die Druckentlastungsvorrichtung umfasst:
- ein Trennelement zur Trennung eines Innenbereichs des Batteriegehäuses von einem Außenbereich des Batteriegehäuses, wobei das Trennelement derart ausgebildet ist, dass es sich im Falle einer vorgebbaren auftretenden Druckdifferenz zwischen dem Innendruck des Batteriegehäuses und dem Umgebungsdruck des Batteriegehäuses dehnt und deformiert,
- ein Halteelement für das Trennelement zur mechanischen Befestigung des Trennelements an dem Batteriegehäuse, und
- ein plattenförmiges Element, das in einem Einbauzustand auf der dem Innenbereich des Batteriegehäuses zugewandten Seite des Trennelements parallel zu dem Trennelement angeordnet ist.

Die Druckentlastungsvorrichtung gemäß der vorliegenden Erfindung ist dadurch gekennzeichnet, dass das plattenförmige Element
a) über einen plastisch oder elastisch verformbaren Steg mit dem Halteelement mechanisch gekoppelt ist und eine geradlinige Aussparung aufweist, die sich innerhalb des plattenförmigen Elements ab einem vorgebbaren Abstand von dem Steg quer zu einer durch den Steg gegebenen Kippachse A mittig zu einer Gerade B durch das plattenförmige Element erstreckt und in einem vorgebbaren Abstand zu dem dem Steg gegenüberliegenden geschlossenen Rand des plattenförmigen Elements endet; oder
b) über einen ersten und einen zweiten, plastisch oder elastisch verformbaren Steg mit dem Halteelement mechanisch gekoppelt ist, wobei die beiden Stege einander gegenüber und mittig zu einer durch den Mittelpunkt des plattenförmigen Elements verlaufende Gerade B angeordnet sind, und eine geradlinig verlaufende Aussparung aufweist, deren Längsachse mit der Geraden B fluchtet und die sich innerhalb des plattenförmigen Elements ab einem vorgebbaren Abstand vom ersten Steg bis hin zu einem vorgebbaren Abstand vom zweiten Steg erstreckt.

Wie die Erfinder der vorliegenden Erfindung festgestellt haben, wird das plattenförmige Element bei der in der DE 10 2014 017 232 A1 vorgeschlagenen Lösung bei einem durch heftige Gasentwicklung entstehendem Staudruck im Batteriegehäuse sicher gegen das Trennelement (die Druckausgleichs- oder Berst-Membran) gedrückt und dieses reißt auch zuverlässig an der freien Kante des plattenförmigen Elements (der "Blechkante") auf. Das plattenförmige Element wird in der Folge weiter in Richtung der Außenseite des Batteriegehäuses gedrückt, wobei dessen Ränder jedoch mit der Wandung eines regelmäßig vorhandenen Anschlussstutzens und/oder der Wandung eines Abgasrohrs kollidieren. Hierdurch kann sich das plattenförmige Element nur bis zu einem Winkel von etwa 70° aufbiegen und versperrt weiterhin einen Teil der Entgasungsöffnung.

Durch das Vorsehen der geradlinig verlaufenden Aussparung gemäß obiger Option a) wird erreicht, dass das plattenförmige Element bei einer Kollision seiner Ränder mit der Wandung des Anschlussstutzens und/oder des Abgasrohrs an den jeweiligen Enden der Aussparung derart abknickt, dass es sich "Satteldach-förmig" an die Wandung des Anschlussstutzens und/oder des Abgasrohrs anlegen kann. Hierdurch wird ein größerer Teil der Entgasungsöffnung freigegeben, als dies bei der technischen Lösung gemäß der DE 10 2014 017 232 A1 der Fall ist.

Bei der technischen Lösung gemäß obiger Option b) wird erreicht, dass bei einem durch heftige Gasentwicklung entstehendem Staudruck im Batteriegehäuse die freien Seiten, d.h. die nicht durch die Stege gehaltenen Bereiche des plattenförmigen Elements gegen das Trennelement (die Druckausgleichs- oder Berst-Membran) gedrückt werden und dieses an zwei Stellen eingerissen wird. Auch hier werden die freien Seiten des plattenförmigen Elements in der Folge weiter in Richtung der Außenseite des Batteriegehäuses gedrückt, wobei die freien Seiten jedoch nicht mit der Wandung eines Anschlussstutzens und/oder eines Abgasrohrs kollidieren. Vielmehr können sich die freien Seiten des plattenförmigen Elements ungehindert in Richtung der Außenseite des Batteriegehäuses bewegen und so den größtmöglichen Teil der Entgasungsöffnung freigeben.

Gemäß einer ersten vorteilhaften Weiterbildung der Druckentlastungsvorrichtung weist diese ein oder zwei, gegenüber dem Trennelement ortsfest angeordnete steg- oder stiftartige Elemente auf, die sich auf der in einem Einbauzustand dem Außenbereich des Batteriegehäuses zugewandten Seite des Trennelements parallel zu dem Trennelement erstrecken, dessen oder deren Längsachse mit der Gerade B fluchten und dessen oder deren Breite kleiner als die Breite der Aussparung des plattenförmigen Elements ist.

Gemäß einer weiteren vorteilhaften Weiterbildung der Druckentlastungsvorrichtung weist das plattenförmige Element eine runde Form, vorzugsweise eine elliptische Form, insbesondere eine Kreisform, auf.

Ebenso ist es von Vorteil, wenn das Trennelement durch eine Membran, insbesondere eine poröse Membran, ausgebildet ist, welche dazu ausgelegt ist, einen Übertritt von Gasen zwischen dem Innenbereich und dem Außenbereich eines Batteriegehäuses zu ermöglichen.

Die vorliegende Erfindung umfasst auch ein Batteriegehäuse zur Aufnahme von wenigstens einer Batteriezelle, etwa einer Lithium-Ionen-Batteriezelle. Das erfindungsgemäße Batteriegehäuse ist dadurch gekennzeichnet, dass wenigstens eine Wandung des Batteriegehäuses eine erfindungsgemäße Druckentlastungsvorrichtung oder eine ihrer vorteilhaften Weiterbildungen und Ausgestaltungen aufweist.

Das Batteriegehäuse kann in vorteilhafter Weise weiter einen Anschlussstutzen zum Anschließen eines Abgasrohrs zum Ableiten von aus dem Batteriegehäuse entweichenden Gasen aufweisen, wobei zwischen dem Anschlussstutzen und der Druckentlastungsvorrichtung eine fluidische Verbindung vorgesehen ist. Des Weiteren kann das Batteriegehäuse ein am Anschlussstutzen angeschlossenes Abgasrohr zum Ableiten von aus dem Batteriegehäuse entweichenden Gasen aufweisen.

Die vorliegende Erfindung umfasst auch eine Batterie mit wenigstens einer Batteriezelle, wobei die Batterie dadurch gekennzeichnet ist, dass die wenigstens eine Batteriezelle in einem erfindungsgemäßen Batteriegehäuse oder einer seiner vorteilhaften Weiterbildungen oder Ausgestaltungen angeordnet ist.

Von der vorliegenden Erfindung umfasst ist auch ein Verfahren zur Druckentlastung einer erfindungsgemäßen Batterie ab einem vorgebbaren, aufgrund eines thermischen Durchgehens wenigstens einer Batteriezelle entstehenden Überdruck im Innenbereich des Batteriegehäuses gegenüber dem Umgebungsdruck des Batteriegehäuses, umfassend die Schritte:
- Bereitstellen einer erfindungsgemäßen Batterie, und
   -- Kippen des über einen plastisch oder elastisch verformbaren Steg mit dem Halteelement mechanisch gekoppelten plattenförmigen Elements ab einem vorgebbaren Staudruck auf das plattenförmige Element um eine durch den Steg gegebene Kippachse A in Richtung des Trennelements und Ausbilden eines Risses in dem Trennelement entlang einer Kante des plattenförmigen Elements, welche in die Oberfläche des Trennelements eingedrungen ist, zur Ableitung des Überdrucks, oder
   -- Kippen der freien Seiten des plattenförmigen Elements, das über einen ersten und einen zweiten, plastisch oder elastisch verformbaren Steg mit dem Halteelement mechanisch gekoppelt ist, ab einem vorgebbaren Staudruck auf das plattenförmige Element um die durch die Gerade B gebildete Kippachse in Richtung des Trennelements und Ausbilden jeweils eines Risses in dem Trennelement entlang der beiden Kanten des plattenförmigen Elements, welche in die Oberfläche des Trennelements eingedrungen sind, zur Ableitung des Überdrucks.

Die für die erfindungsgemäße Druckentlastungsentlastungsvorrichtung, das erfindungsgemäße Batteriegehäuse und die erfindungsgemäße Batterie beschriebenen Vorteile und Merkmale sowie Ausführungsformen gelten gleichermaßen für das erfindungsgemäße Verfahren und umgekehrt. Folglich können für Vorrichtungsmerkmale entsprechende Verfahrensmerkmale und umgekehrt vorgesehen sein.

Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: ein erstes Beispiel einer Druckentlastungsvorrichtung gemäß der vorliegenden Erfindung;
- Fig. 2: ein zweites Beispiel einer Druckentlastungsvorrichtung gemäß der vorliegenden Erfindung;
- Fig. 3: ein drittes Beispiel einer Druckentlastungsvorrichtung gemäß der vorliegenden Erfindung;
- Fig. 4: ein Beispiel für ein plattenförmiges Element der Druckentlastungsvorrichtung;
- Fig. 5: ein Beispiel einer Druckentlastungsvorrichtung gemäß der vorliegenden Erfindung mit einem auf der dem Außenbereich zugewandten Seite des Trennelements parallel zu dem Trennelement erstreckenden steg- oder stiftartigen Element;
- Fig. 6: ein Beispiel einer Druckentlastungsvorrichtung gemäß der vorliegenden Erfindung mit zwei auf der dem Außenbereich zugewandten Seite des Trennelements parallel zu dem Trennelement erstreckenden steg- oder stiftartigen Elementen;
- Fig. 7: ein Beispiel eines Batteriegehäuses gemäß der vorliegenden Erfindung;
- Fig. 8: das Beispiel gemäß Fig. 7 mit einem durch einen Staudruck in Richtung Außenbereich des Batteriegehäuses gekippten plattenförmigen Element.

Die Darstellungen in den Figuren sind rein schematisch und nicht maßstabsgerecht. Innerhalb der Figuren sind gleiche oder ähnliche Elemente mit gleichen Bezugszeichen versehen.

Die nachfolgend erläuterten Ausführungsbeispiele stellen bevorzugte Ausführungsformen der vorliegenden Erfindung dar. Die vorliegende Erfindung ist selbstverständlich nicht auf diese Ausführungsformen beschränkt.

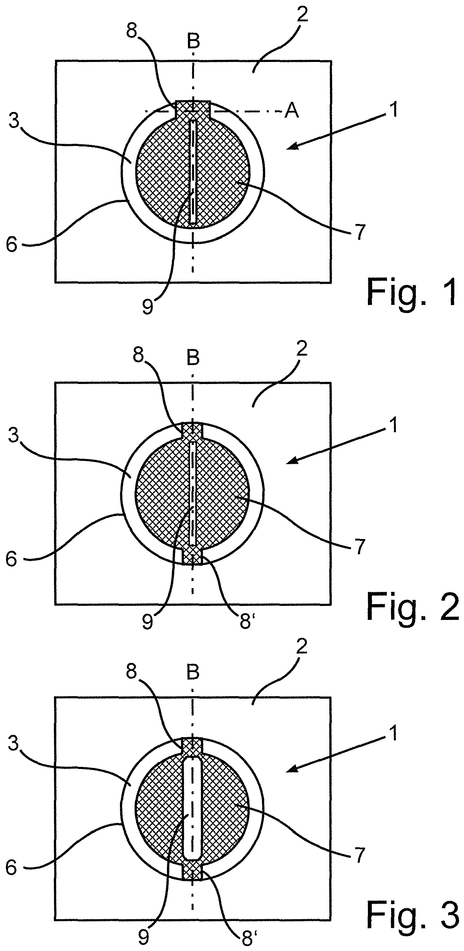

In den Figuren 1 bis 3 sind drei der verschiedenen möglichen Ausgestaltungen der Druckentlastungsvorrichtung 1 gemäß der vorliegenden Erfindung dargestellt. Auch wenn in den Figuren 1 bis 3 ein Batteriegehäuse 2 angedeutet ist, so ist dieses kein Bestandteil der Druckentlastungsvorrichtung 1. Die Figuren 1 bis 3 zeigen einen Blick auf die Innenseite einer Wandung eines Batteriegehäuses 2 mit der Druckentlastungsvorrichtung 1 in einem Einbauzustand.

Die Druckentlastungsvorrichtung 1 weist ein Trennelement 3 auf, bei dem es sich bevorzugt um eine gasdurchlässige Membran, insbesondere um eine PTFE-Membran handelt, wobei das Trennelement 3 mittels eines Halteelements 6 fixiert ist. Die Druckentlastungsvorrichtung 1 ist in einem Einbauzustand in einer Öffnung einer Wandung des Batteriegehäuses 2 angeordnet, bspw. indem das Halteelement 6 in der Wandung des Batteriegehäuses 2 lösbar oder unlösbar befestigt ist. Die Druckentlastungsvorrichtung 1 und somit auch das Trennelement 3 trennen in einem Einbauzustand einen Innenbereich 4 des Batteriegehäuses 2 von einem Außenbereich 5 des Batteriegehäuses 2.

Allen Ausgestaltungen ebenfalls gemeinsam ist, dass das bei der Druckentlastungsvorrichtung 1 vorgesehene plattenförmige Element 7, bei dem es sich bevorzugt um ein Metallplättchen mit scharfkantigen Rändern handelt, auf der dem Innenbereich 4 eines Batteriegehäuses 2 zugewandten Seite der Druckentlastungsvorrichtung 1 parallel zum Trennelement 3 positioniert und nur an einer oder zwei Stellen 8, 8' fixiert ist.

Das plattenförmige Element 7 muss nicht notwendigerweise aus Metall ausgebildet sein, es kann beispielsweise auch aus Kunststoff, einem Mineral oder einer Keramik hergestellt sein. Insbesondere können das plattenförmige Element 7 und der oder die Stege 10, 10' auch aus unterschiedlichen Materialien bestehen.

Das Trennelement 3 und das plattenförmige Element 7 weisen einen geringen Abstand zueinander auf. Der Abstand zwischen dem Trennelement 3 und dem plattenförmigen Element 7 ist gering verglichen mit den Durchmessern von Trennelement 3 und plattenförmigem Element 7.

In den in den Figuren 1 bis 3 dargestellten Ausführungsbeispielen weist das Trennelement 3 eine bevorzugte, nämlich kreisförmige Form auf. In entsprechender Weise weist auch das plattenförmige Element 7 (mit Ausnahme des Stegs 7 bzw. der Stege 8, 8') ebenfalls eine kreisförmige Form auf, wobei der Durchmesser des plattenförmigen Elements 7 kleiner ist als der Durchmesser des Trennelements 3.

Durch den sich so ergebenden ringförmigen Spalt zwischen der Haltevorrichtung 6 und dem plattenförmigen Element 7 kann im normalen Betrieb der Batterie eine sich langsam aufbauende Druckdifferenz zwischen dem Innendruck und dem Umgebungsdruck ohne Weiteres durch die intakte Membran hindurch ausgeglichen werden. Im Falle eines plötzlichen Druckanstiegs im Innenbereich des Batteriegehäuses und einem sich so ergebenden Staudruck auf das plattenförmige Element 7 wird dieses nach außen gedrückt und führt zu einer Rissbildung in dem Trennelement 3 (der Membran).

Die Stellen 8, 8' sind als Steg oder Stege ausgebildet, welcher oder welche Teil des plattenförmigen Elements 7 sein kann oder können. Die mechanische Fixierung des plattenförmigen Elements 7 über den oder die Stege 8, 8' bei der Druckentlastungsvorrichtung 1 kann bspw. mittels des Halteelements 6 realisiert sein, durch den auch das Trennelement 3 fixiert ist.

Eine weitere Gemeinsamkeit der in den Figuren 1 bis 3 dargestellten Druckentlastungsvorrichtungen 1 ist, dass das plattenförmige Element 7 eine geradlinige Aussparung 9 aufweist, deren Längsachse entweder quer zu einer durch den Steg 8 gegebenen Kippachse A mittig durch das plattenförmige Element 7 oder vom ersten Steg 8 bis hin zum zweiten Steg 8' verläuft.

Die Breite des oder der Stege 8, 8' sowie die Breite und Länge der Aussparung 9 innerhalb des plattenförmigen Elements 7 und somit auch der Abstand zum Ende der Aussparung 9 zu dem oder den Stegen 8, 8' wird ein Fachmann im Hinblick auf die Materialeigenschaften und die Dicke des plattenförmigen Elements 7 und den zu erwartenden Staudruck wählen. Sofern in der vorliegenden Anmeldung davon gesprochen wird, dass ein "vorgebbarer Abstand" gewählt oder gegeben ist, so kann dieser auch Null mm betragen.

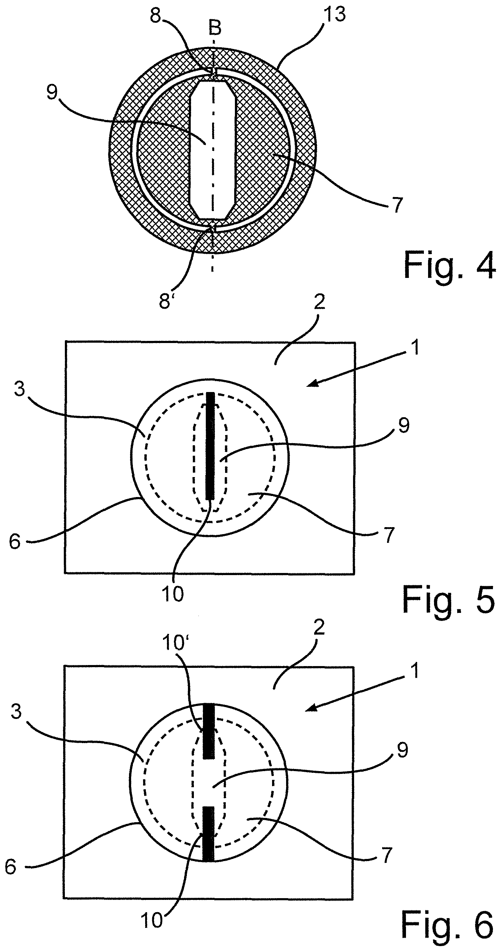

Wie die Erfinder der vorliegenden Erfindung überraschend festgestellt haben, kann die Aussparung 9 in vorteilhafter Weise sogar eine vergleichsweise große Breite aufweisen, bis hin zu etwa 30 % bis 35 % der Breite eines im Fig. 3 (und auch in Fig. 4) gezeigten Beispiels eines kreisförmigen plattenförmigen Elements 7.

Das plattenförmige Element 7 (das Metallplättchen) wird durch die Kraft, die durch den bei einem thermischen Durchgehenden entstehenden Staudruck auf das plattenförmige Element 7 ausgeübt wird, nach außen in Richtung des Trennelements 3 gebogen bzw. gekippt. Dies führt bei dem Trennelement 3 zu einer definierten Überdehnung und in der Folge davon zu einer Rissbildung. Durch eine entsprechende Ausformung des plattenförmigen Elements 7 an der Kante als Schneide kann die Rissbildung unterstützt werden.

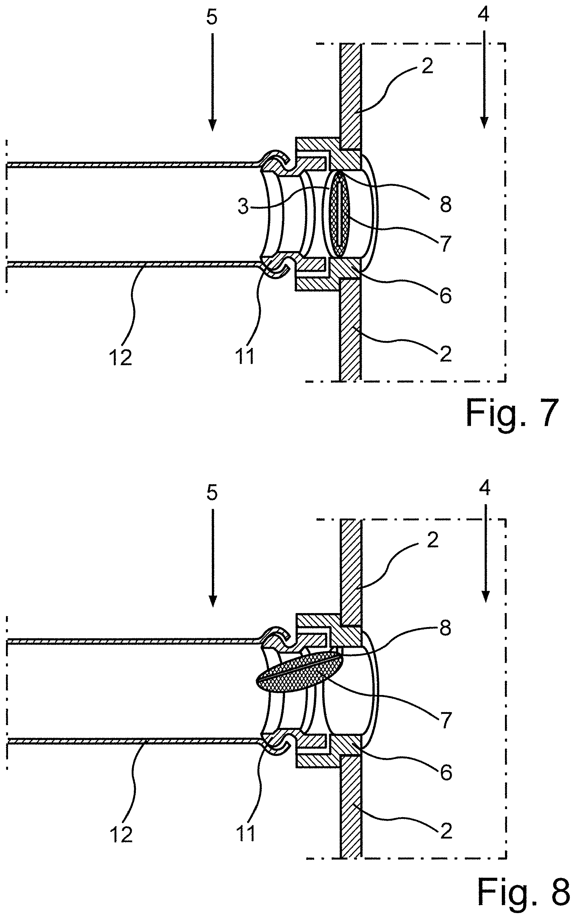

Bei dem in Fig. 1 gezeigten Beispiel erfolgt zuerst ein Umbiegen bzw. Kippen des plattenförmigen Elements 7 um die Achse A des Stegs 8, wobei die (in Fig. 1 untere) Kante des plattenförmigen Elements 7 in das Trennelement 3 schneidet und dieses somit öffnet. Im weiteren Verlauf, wenn sich das plattenförmige Element 7 aufgrund des hohen Gasdrucks im Inneren des Batteriegehäuses im Vergleich zum Umgebungsdruck weiter in Richtung der Außenseite des Batteriegehäuses 2 bewegt und dabei die seitlichen (in der Fig. 1 linken und rechten) Ränder des plattenförmigen Elements 7 mit der Innenwandung eines Anschlussstutzens 11 und/oder der Innenwandung eines Abgasrohrs 12 kollidieren, erfolgt aufgrund der hierbei erfolgenden Krafteinwirkung auf diese Ränder des plattenförmigen Elements 7 eine zweite Kippbewegung des plattenförmigen Elements 7 um die Achse B, so dass sich das plattenförmige Element 7 "Satteldach-förmig" an der Innenwandung des Anschlussstutzens 11 und/oder der Innenwandung des Abgasrohrs 12 anlegen kann (siehe Fig. 8). Hierdurch wird ein größtmöglicher Teil der Öffnung, die zum Entweichen von Gasen vorgesehen ist, durch das plattenförmige Element 7 freigegeben und es kann das Gas somit ausreichend rasch aus dem Batteriegehäuse 2 entweichen.

Bei den in den Figuren 2 und 3 gezeigten Beispielen erfolgt bei einem ausreichend hohen Staudruck ein Kippen bzw. Biegen der (in den Figuren 2 und 3 linken und rechten) freien Ränder des plattenförmigen Elements 7 um die Achse B in Richtung des Trennelements 3. Die beiden freien Ränder des plattenförmigen Elements 7 schneiden so in das Trennelement 3 und öffnen dieses.

Das plattenförmige Element 7 ist in allen Fällen noch mit dem Halteelement 6 mechanisch gekoppelt und kann somit nicht herausfallen bzw. herausgeschleudert werden.

Die Druckentlastungsvorrichtung 1, d.h. insbesondere die Berst-Membran 3, das plattenförmige Element 7 (insbesondere dessen Größe, Material und Materialstärke), der Steg 8 oder die Stege 8, 8' (insbesondere deren Größe, Material und Materialstärke), die Breite und Länge der Aussparung 9 etc. sind selbstverständlich so aufeinander abzustimmen, dass das Trennelement 3 schon vor Erreichen des kritischen Innendrucks von 0,5 bar durchtrennt wird und das Ventinggas entweichen kann. Die entsprechenden Parameter können mittels einiger geeigneter Versuche ermittelt werden.

Bevorzugt ist das Trennelement 3 durch eine Membran, insbesondere eine poröse Membran, besonders bevorzugt durch eine PTFE-Membran mit Mikroporen ausgebildet, welche dazu ausgelegt ist, einen Übertritt von Gasen zwischen dem Innenbereich 4 und dem Außenbereich 5 des Batteriegehäuses 2 zu ermöglichen. Somit erfüllt das Trennelement 3 zwei Funktionen, nämlich die der Angleichung des Innendrucks an einen sich langsam ändernden Umgebungsdruck, sowie die der Ableitung eines mit hoher Geschwindigkeit infolge einer Fehlfunktion von Batteriezellen ansteigenden Innendrucks in den Außenbereich 5.

Fig. 4 zeigt ein Beispiel für ein plattenförmiges Element 7 gemäß Anspruch 1, Option b), wobei die Stege 8, 8' mit einem ringförmigen Element 13 verbunden ist. Dieses ringförmige Element 13 kann dazu dienen, das plattenförmige Element 7 auf einfache Weise mittels des Halteelements 6 mechanisch befestigen zu können.

In den Figuren 5 und 6 sind Beispiele für weitere vorteilhafte Weiterbildungen der Druckentlastungsvorrichtung 1 gemäß der vorliegenden Erfindung mit einem bzw. zwei steg- oder stiftartigen Elementen 10, 10' dargestellt. Die Figuren 7 und 6 zeigen einen Blick auf die Druckentlastungsvorrichtung 1 in einem Einbauzustand von außen auf ein Batteriegehäuse 2.

Dieses steg- oder stiftartige Element 10 oder diese steg- oder stiftartigen Elemente 10, 10', das oder die gegenüber dem Trennelement 3 ortsfest angeordneten ist oder sind, erstreckt oder erstrecken sich auf der dem Außenbereich zugewandten Seite des Trennelements 3 parallel zu dem Trennelement 3. Die Längsachse des steg- oder stiftartigen Elements 10 oder der steg- oder stiftartigen Elemente 10, 10' fluchtet/fluchten mit der Gerade B. Weiter ist die Breite des steg- oder stiftartigen Elements 10 oder der steg- oder stiftartigen Elemente 10, 10' kleiner als die Breite der Aussparung 9 des plattenförmigen Elements 7.

Durch ein oder zwei derartige steg- oder stiftartige Elemente 10, 10' kann erreicht werden, dass sich das Trennelement 3 bei einem thermischen Durchgehen nicht oder nur wenig in Richtung des Außenbereichs 5 des Batteriegehäuses 2 ausbeulen kann. Hierdurch wird das Durchtrennen des Trennelements 3 durch das plattenförmige Element 7 noch schneller und sicherer gewährleistet, als dies ohne das oder die steg- oder stiftartigen Elemente 10, 10' der Fall ist, ohne die Bewegung des plattenförmigen Elements 7 bei Auftreten eines thermischen Durchgehens in irgendeiner Weise zu behindern. Hierbei ist selbstverständlich darauf zu achten, dass bei einem plattenförmigen Element 7 gemäß Anspruch 1, Option a) nur ein steg- oder stiftförmiges Element 10 verwendet wird, wie es in Fig. 5 dargestellt ist, um das Bewegen des plattenförmigen Elements 7 in Richtung des Außenbereichs 5 des Batteriegehäuses 2 zu ermöglichen (Vermeidung einer Kollision zwischen dem freien Ende des steg- oder stiftförmigen Elements 10 mit dem geschlossenen (in der Fig. 1 unteren) Rand des plattenförmigen Elements 7).

Bei einem plattenförmigen Element 7 gemäß Anspruch 1, Option b) können sowohl die in Figuren 5 und 6 dargestellten Ausgestaltungen verwendet werden, als auch ein sich einstückig von einer Seite des Halteelements 6 zu der gegenüberliegenden Seite des Halteelements 6 erstreckendes steg- oder stiftförmiges Element 10.

Unter normalen Betriebsbedingungen der Batterie entstehen max. 10 mbar Druckdifferenz. Bei solch niedrigen Drücken wölbt sich das Trennelement 3 (die Berst-Membran) nicht oder nur so schwach aus, dass es nicht zu einer Verletzung durch das oder die steg- oder stiftartigen Elemente 10, 10' kommen kann.

In den Figuren 7 und 8 ist ein Beispiel für ein Batteriegehäuse mit einer Druckentlastungsvorrichtung, einem Anschlussstutzen 11 für eine Abgasrohr 12 und einem Abgasrohr 12 abgebildet.

Bei dem in den Figuren 7 und 8 abgebildeten Beispiel ist als ein plattenförmiges Element 7 eines gemäß Anspruch 1, Option a) vorgesehen, selbstverständlich kann auch jedes andere plattenförmige Element 7, wie es in der vorliegenden Anmeldung beschrieben ist, verwendet werden.

In den Figuren 7 und 8 sind die Haltevorrichtung 6 und der Anschlussstutzen 11 als getrennte Elemente abgebildet. Selbstverständlich können die Haltevorrichtung 6 und der Anschlussstutzen 11 auch als ein gemeinsames Bauelement ausgebildet sein.

Durch ein am Anschlussstutzen 11 befestigtes Abgasrohr 12 lassen sich vorteilhafterweise aus dem Batteriegehäuse 2 austretende Gase, wie sie beispielsweise bei einem thermischen Durchgehen von wenigstens einer Batteriezelle und dem Öffnen des Trennelements 3 auftreten, definiert und gezielt in die Umgebung abgeführt werden.

Eine Batterie gemäß der vorliegenden Erfindung ist dadurch gekennzeichnet, dass wenigstens eine Batteriezelle in einem erfindungsgemäßen Batteriegehäuse 2 oder eines seiner vorteilhaften Weiterbildungen und Ausgestaltungen angeordnet ist.

Von der vorliegenden Erfindung weiter umfasst ist nicht nur das Verfahren gemäß Anspruch 9 sondern auch alle Weiterbildungen und Ausgestaltungen davon, die sich für einen Fachmann aus der Beschreibung der Druckentlastungsvorrichtung 1, des Batteriegehäuses 2, der Batterie, der Figurenbeschreibung sowie den Figuren ohne weiteres ergeben.

Die oben dargelegten Ausführungsbeispiele dienen lediglich der Erläuterung der Erfindung und sind für diese nicht beschränkend. So können konstruktive Merkmale, insbesondere die Formen der dargestellten Elemente, beliebig gestaltet sein, ohne den Gedanken der Erfindung zu verlassen. Weiterhin ist die Anwendung der Erfindung nicht auf eine bestimmte Batterietechnologie wie die Lithium-Ionen-Technologie beschränkt. Auch ist die Erfindung nicht auf eine bestimmte Art der Anwendung, etwa in einem Kraftfahrzeug beschränkt, vielmehr kann die Erfindung auch bei stationären Batteriesystemen, beispielsweise in Fotovoltaikanlagen, zum Einsatz kommen.

Durch die vorliegende Erfindung wird ein schnelles und prozesssicheres Öffnen einer Druckentlastungsvorrichtung, die beim normalen Betrieb einer Batterie als Druckausgleichsvorrichtung dient, im Falle eines thermischen Events einer Batterie, insbesondere einer Hochvolt-Batterie, sichergestellt. Dadurch wird bei einem thermischen Event in einer Batterie ein höheres Maß an Sicherheit erreicht.

## Patentansprüche

1. Druckentlastungsvorrichtung (1) für ein Batteriegehäuse (2), welche dazu ausgelegt ist, eine aufgrund eines thermischen Durchgehens von wenigstens einer Batteriezelle entstehende Druckdifferenz zwischen einem Innendruck des Batteriegehäuses (2) und einem Umgebungsdruck des Batteriegehäuses (2) auszugleichen, wobei die Druckentlastungsvorrichtung (1) umfasst:
- ein Trennelement (3) zur Trennung eines Innenbereichs (4) des Batteriegehäuses (2) von einem Außenbereich (5) des Batteriegehäuses (2), wobei das Trennelement (3) derart ausgebildet ist, dass es sich im Falle einer vorgebbaren auftretenden Druckdifferenz zwischen dem Innendruck des Batteriegehäuses (2) und dem Umgebungsdruck des Batteriegehäuses (2) dehnt und deformiert,
- ein Halteelement (6) für das Trennelement (3) zur mechanischen Befestigung des Trennelements (3) an dem Batteriegehäuse (2), und
- ein plattenförmiges Element (7), das in einem Einbauzustand auf der dem Innenbereich (4) des Batteriegehäuses (2) zugewandten Seite des Trennelements (3) parallel zu dem Trennelement (3) angeordnet ist
**dadurch gekennzeichnet,**
**dass** das plattenförmige Element (7)
a) über einen plastisch oder elastisch verformbaren Steg (8) mit dem Halteelement (6) mechanisch gekoppelt ist und eine geradlinige Aussparung (9) aufweist, die sich innerhalb des plattenförmigen Elements (7) ab einem vorgebbaren Abstand von dem Steg (8) quer zu einer durch den Steg (8) gegebenen Kippachse A mittig zu einer Gerade B durch das plattenförmige Element (7) erstreckt und in einem vorgebbaren Abstand zu dem Steg (8) gegenüberliegenden geschlossenen Rand des plattenförmigen Elements (7) endet; oder
b) über einen ersten (8) und einen zweiten (8'), plastisch oder elastisch verformbaren Steg mit dem Halteelement (6) mechanisch gekoppelt ist, wobei die beiden Stege (8, 8') einander gegenüber und mittig zu einer durch den Mittelpunkt des plattenförmigen Elements (7) verlaufende Gerade B angeordnet sind, und eine geradlinig verlaufende Aussparung (9) aufweist, deren Längsachse mit der Geraden B fluchtet und die sich innerhalb des plattenförmigen Elements (7) ab einem vorgebbaren Abstand vom ersten Steg (8) bis hin zu einem vorgebbaren Abstand vom zweiten Steg (8') erstreckt.

2. Druckentlastungsvorrichtung (1) gemäß Anspruch 1,
**dadurch gekennzeichnet**
die Druckentlastungsvorrichtung (1) ein oder zwei, gegenüber dem Trennelement (3) ortsfest angeordnete stegartige oder stiftartige Elemente (10, 10') aufweist, die sich auf der in einem Einbauzustand dem Außenbereich (5) des Batteriegehäuses (2) zugewandten Seite des Trennelements (3) parallel zu dem Trennelement (3) erstrecken, dessen oder deren Längsachse mit der Gerade B fluchten und dessen oder deren Breite kleiner als die Breite der Aussparung (9) des plattenförmigen Elements (7) ist.

3. Druckentlastungsvorrichtung (1) gemäß Anspruch 1 oder 2,
**dadurch gekennzeichnet, dass**
das plattenförmige Element (7) eine runde Form, vorzugsweise eine elliptische Form, insbesondere eine Kreisform, aufweist.

4. Druckentlastungsvorrichtung (1) gemäß einem der vorhergehenden Ansprüche,
**dadurch gekennzeichnet, dass**
das Trennelement (3) durch eine Membran, insbesondere eine poröse Membran, ausgebildet ist, welche dazu ausgelegt ist, einen Übertritt von Gasen zwischen dem Innenbereich (4) und dem Außenbereich (5) eines Batteriegehäuses (2) zu ermöglichen.

5. Batteriegehäuse (2) zur Aufnahme von wenigstens einer Batteriezelle,
**dadurch gekennzeichnet, dass**
wenigstens eine Wandung des Batteriegehäuses eine Druckentlastungsvorrichtung (1) gemäß einem der Ansprüche 1 bis 4 aufweist.

6. Batteriegehäuse (2) gemäß Anspruch 5,
**dadurch gekennzeichnet, dass** es
- einen Anschlussstutzen (11) zum Anschließen eines Abgasrohrs (12) zum Ableiten von aus dem Batteriegehäuse (2) entweichenden Gasen aufweist, wobei zwischen dem Anschlussstutzen (11) und der Druckentlastungsvorrichtung (1) eine fluidische Verbindung vorgesehen ist.

7. Batteriegehäuse (2) gemäß Anspruch 6,
**dadurch gekennzeichnet, dass**
es ein am Anschlussstutzen (11) angeschlossenes Abgasrohr (12) zum Ableiten von aus dem Batteriegehäuse (2) entweichenden Gasen aufweist.

8. Batterie mit wenigstens einer Batteriezelle,
**dadurch gekennzeichnet, dass**
die wenigstens eine Batteriezelle in einem Batteriegehäuse (2) gemäß einem der Ansprüche 5 bis 7 angeordnet ist.

9. Verfahren zur Druckentlastung einer Batterie gemäß Anspruch 8 ab einem vorgebbaren, aufgrund eines thermischen Durchgehens wenigstens einer Batteriezelle entstehenden Überdruck im Innenbereich (4) des Batteriegehäuses (2) gegenüber dem Umgebungsdruck des Batteriegehäuses (2), umfassend die Schritte:
- Bereitstellen einer Batterie mit den Merkmalen gemäß Anspruch 8, und
-- Kippen des über einen plastisch oder elastisch verformbaren Steg (8) mit dem Halteelement (6) mechanisch gekoppelten plattenförmigen Elements (7) ab einem vorgebbaren auftretenden Staudruck auf das plattenförmige Element (7) um eine durch den Steg (8) gegebene Kippachse A in Richtung des Trennelements (3) und Ausbilden eines Risses in dem Trennelement (3) entlang einer Kante des plattenförmigen Elements (7), welche in die Oberfläche des Trennelements (3) eingedrungen ist, zur Ableitung des Überdrucks, oder
-- Kippen der freien Seiten des plattenförmigen Elements (7), das über einen ersten (8) und einen zweiten (8'), plastisch oder elastisch verformbaren Steg mit dem Halteelement (6) mechanisch gekoppelt ist, ab einem vorgebbaren auftretenden Staudruck auf das plattenförmige Element (7) um die durch die Gerade B gebildete Kippachse in Richtung des Trennelements (3) und Ausbilden jeweils eines Risses in dem Trennelement (3) entlang der beiden Kanten des plattenförmigen Elements (7), welche in die Oberfläche des Trennelements (3) eingedrungen sind, zur Ableitung des Überdrucks.

## Claims

1. Pressure relief device (1) for a battery housing (2), which device is designed to compensate for a pressure difference between an internal pressure of the battery housing (2) and an ambient pressure of the battery housing (2), which difference occurs as a result of a thermal runaway from at least one battery cell, the pressure relief device (1) comprising:
- a separating element (3) for separating an inner region (4) of the battery housing (2) from an outer region (5) of the battery housing (2), the separating element (3) being designed such that it stretches and deforms when a predeterminable pressure difference occurs between the internal pressure of the battery housing (2) and the ambient pressure of the battery housing (2),
- a retaining element (6) for the separating element (3) in order to mechanically fasten the separating element (3) to the battery housing (2), and
- a planar element (7) which, in an installed state, is arranged on the side of the separating element (3) facing the inner region (4) of the battery housing (2) in parallel with the separating element (3),
**characterized in that** the planar element (7)
a) is mechanically coupled to the retaining element (6) by means of a plastically or elastically deformable projection (8) and has a rectilinear recess (9) which extends within the planar element (7) from a predeterminable distance from the projection (8) transversely to a tilting axis A provided by the projection (8) and centrally with respect to a straight line B through the planar element (7) and ends at a predeterminable distance from the closed edge of the planar element (7) that is opposite the projection (8); or
b) is mechanically coupled to the retaining element (6) by means of a first (8) and a second (8') plastically or elastically deformable projection, the two projections (8, 8') being arranged opposite one another and centrally with respect to a straight line B extending through the middle point of the planar element (7), and has a rectilinearly extending recess (9), the longitudinal axis of which aligns with the straight line B and which extends within the planar element (7) from a predeterminable distance from the first projection (8) as far as to a predeterminable distance from the second projection (8').

2. Pressure relief device (1) according to claim 1, **characterized in that** the pressure relief device (1) has one or two projection-like or pin-like elements (10, 10') which are fixedly arranged relative to the separating element (3) and extend on the side of the separating element (3) facing the outer region (5) of the battery housing (2) in an installed state in parallel with the separating element (3), the longitudinal axis of which element(s) aligns with the straight line B and the width of which element(s) is smaller than the width of the recess (9) of the planar element (7).

3. Pressure relief device (1) according to either claim 1 or claim 2, **characterized in that** the planar element (7) is round, preferably elliptical, in particular circular.

4. Pressure relief device (1) according to any of the preceding claims, **characterized in that** the separating element (3) is formed by a membrane, in particular a porous membrane, which is designed to allow gases to pass between the inner region (4) and outer region (5) of the battery housing (2).

5. Battery housing (2) for receiving at least one battery cell, **characterized in that** at least one wall of the battery housing has a pressure relief device (1) according to any of claims 1 to 4.

6. Battery housing (2) according to claim 5, **characterized in that**
- it has a connecting piece (11) for connecting an exhaust pipe (12) for discharging gases escaping from the battery housing (2), a fluidic connection being provided between the connecting piece (11) and the pressure relief device (1).

7. Battery housing (2) according to claim 6, **characterized in that** it has an exhaust pipe (12) connected to the connecting piece (11) for discharging gases escaping from the battery housing (2).

8. Battery comprising at least one battery cell, **characterized in that** the at least one battery cell is arranged in a battery housing (2) according to any of claims 5 to 7.

9. Method for relieving the pressure of a battery according to claim 8 from a predeterminable overpressure in the inner region (4) of the battery housing (2) relative to the ambient pressure of the battery housing (2), which overpressure occurs as a result of a thermal runaway of at least one battery cell, comprising the steps of:
- providing a battery which comprises the features according to claim 8, and
- tilting the planar element (7) which is mechanically coupled to the retaining element (6) by means of a plastically or elastically deformable projection (8) from a predeterminable dynamic pressure which occurs on the planar element (7) about a tilting axis A provided by the projection (8) and in the direction of the separating element (3), and forming a crack in the separating element (3) along an edge of the planar element (7), which edge penetrates into the surface of the separating element (3), in order to discharge the overpressure, or
- tilting the free sides of the planar element (7) which is mechanically coupled to the retaining element (6) by means of a first (8) and a second (8') plastically or elastically deformable projection from a predeterminable dynamic pressure which occurs on the planar element (7) about the tilting axis formed by the straight line B and in the direction of the separating element (3), and forming a crack in the separating element (3) along the two edges of the planar element (7) in each case, which edges penetrate into the surface of the separating element (3), in order to discharge the overpressure.

## Revendications

1. Dispositif de décompression (1) pour un boîtier de batterie (2), conçu pour compenser une différence de pression entre une pression interne du boîtier de batterie (2) et une pression ambiante du boîtier de batterie (2) résultant du passage thermique d'au moins une cellule de batterie, le dispositif de décompression (1) comprenant :
- un élément de séparation (3) destiné à séparer une zone intérieure (4) du boîtier de batterie (2) d'une zone extérieure (5) du boîtier de batterie (2), l'élément de séparation (3) étant conçu de telle manière qu'il se dilate et se déforme en cas de différence de pression prédéterminable entre la pression intérieure du boîtier de batterie (2) et la pression ambiante du boîtier de batterie (2),
- un élément de retenue (6) pour l'élément de séparation (3), destiné à la fixation mécanique de l'élément de séparation (3) au boîtier de batterie (2), et
- un élément (7) en forme de plaque qui est disposé, dans un état incorporé, du côté de l'élément de séparation (3) qui est dirigé vers la zone intérieure (4) du boîtier de batterie (2), parallèlement à l'élément de séparation (3)
**caractérisé en ce que** l'élément (7) en forme de plaque
a) est accouplé mécaniquement à l'élément de retenue (6) par l'intermédiaire d'un élément jointif (8) déformable plastiquement ou élastiquement et comporte un évidement rectiligne (9) qui s'étend à l'intérieur de l'élément (7) en forme de plaque à partir d'une distance prédéterminable de l'élément jointif (8) transversalement à un axe de basculement A défini à travers l'élément jointif (8) au centre d'une ligne droite B à travers l'élément (7) en forme de plaque, et se termine à une distance prédéterminable du bord fermé de l'élément (7) en forme de plaque opposé à l'élément jointif (8) ; ou
b) est accouplé mécaniquement à l'élément de retenue (6) par l'intermédiaire d'un premier (8) et d'un second élément jointif (8') déformable plastiquement ou élastiquement, les deux éléments jointifs (8, 8') étant disposés de manière opposée l'un à l'autre et au centre d'une ligne droite B s'étendant à travers le centre de l'élément (7) en forme de plaque, et comporte un évidement rectiligne (9) dont l'axe longitudinal est aligné avec la ligne droite B et qui s'étend à l'intérieur de l'élément (7) en forme de plaque d'une distance prédéterminable du premier élément jointif (8) jusqu'à une distance prédéterminable du second élément jointif (8').

2. Dispositif de décompression (1) selon la revendication 1, **caractérisé en ce que** le dispositif de décompression (1) comporte un ou deux éléments (10, 10') en forme de barre ou de tige qui sont disposés dans une position fixe par rapport à l'élément de séparation (3), lesquels éléments s'étendent, dans un état incorporé, parallèlement à l'élément de séparation (3) du côté de l'élément de séparation (3) dirigé vers la zone extérieure (5) du boîtier de batterie (2), dont l'axe longitudinal est aligné avec la ligne droite B et dont la largeur est inférieure à la largeur de l'évidement (9) de l'élément (7) en forme de plaque.

3. Dispositif de décompression (1) selon la revendication 1 ou 2, **caractérisé en ce que** l'élément (7) en forme de plaque présente une forme ronde, de préférence une forme elliptique, en particulier une forme circulaire.

4. Dispositif de décompression (1) selon l'une des revendications précédentes, **caractérisé en ce que** l'élément de séparation (3) est formé par une membrane, en particulier une membrane poreuse qui est conçue pour permettre le passage de gaz entre la zone intérieure (4) et la zone extérieure (5) d'un boîtier de batterie (2).

5. Boîtier de batterie (2) destiné à recevoir au moins un élément de batterie, **caractérisé en ce qu'**au moins une paroi du boîtier de batterie comporte un dispositif de décompression (1) selon l'une des revendications 1 à 4.

6. Boîtier de batterie (2) selon la revendication 5, **caractérisé en ce qu'**il
- comporte un raccord (11) destiné à relier un tuyau d'échappement (12) pour évacuer les gaz s'échappant du boîtier de batterie (2), une liaison fluidique étant prévue entre le raccord (11) et le dispositif de décompression (1).

7. Boîtier de batterie (2) selon la revendication 6, **caractérisé en ce qu'**il comporte un tuyau d'échappement (12) relié au raccord (11) pour évacuer les gaz s'échappant du boîtier de batterie (2).

8. Batterie comprenant au moins une cellule de batterie, **caractérisée en ce que** ladite au moins une cellule de batterie est disposée dans un boîtier de batterie (2) selon l'une des revendications 5 à 7.

9. Procédé de décompression d'une batterie selon la revendication 8, à partir d'une surpression prédéterminable résultant du passage thermique d'au moins une cellule de batterie dans la zone intérieure (4) du boîtier de batterie (2) par rapport à la pression ambiante du boîtier de batterie (2), comprenant les étapes :
- de fourniture d'une batterie présentant les caractéristiques selon la revendication 8, et
-- de basculement de l'élément (7) en forme de plaque, lequel est accouplé mécaniquement à l'élément de retenue (6) par l'intermédiaire d'un élément jointif (8) déformable plastiquement ou élastiquement, à partir d'une pression dynamique prédéterminable se produisant sur l'élément (7) en forme de plaque autour d'un axe de basculement A défini par l'élément jointif (8) dans la direction de l'élément de séparation (3), et de formation d'une fissure dans l'élément de séparation (3) le long d'un bord de l'élément (7) en forme de plaque, lequel bord de l'élément est pénétré dans la surface de l'élément de séparation (3), afin d'évacuer la surpression, ou
-- de basculement des côtés libres de l'élément (7) en forme de plaque, lequel est accouplé mécaniquement à l'élément de retenue (6) par l'intermédiaire d'un premier (8) et d'un second élément jointif (8') déformable plastiquement ou élastiquement, à partir d'une pression dynamique prédéterminable se produisant sur l'élément (7) en forme de plaque autour de l'axe de basculement formé par la droite B dans la direction de l'élément de séparation (3), et de formation d'une fissure dans l'élément de séparation (3) le long de chacun des deux bords de l'élément (7) en forme de plaque qui sont pénétrés dans la surface de l'élément de séparation (3), afin d'évacuer la surpression.
